# EUROPEAN PATENT APPLICATION

(11) **EP 2 237 198 A1**
(43) Date of publication of application: **06.10.2010**
(21) Application number: 09156977.2
(22) Date of filing: 31.03.2009
(51) Int. Cl.: G06Q 10/00

(54) **Location information based upon electronic tags.**

(71) Applicant: Nederlandse Organisatie voor Toegepast -Natuurwetenschappelijk Onderzoek TNO, 2628 VK Delft (NL)
(72) Inventor: Ruizenaar, Marcel Gregorius Anthonius, 2721 HR Zoetermeer (NL); Neef, Reinder Martinus, 3523 XK Utrecht (NL); van Merrienboer, Simon Adrianus, 3066 HA Rotterdam (NL)
(74) Representative: Hatzmann, Martin

(57) **Abstract**

A method of producing location information relating to articles (9) utilizes tag devices (1), each tag device comprising a memory unit (11) for storing identification data associated with the tag device, a communication unit (12) for communicating with other tag devices and a clock unit (13). The method comprises the steps of:
• the tag devices (1), when in each other's proximity, exchanging identification data and storing the time and date of the exchange together with the identification data of the other tag device,
• the tag devices (1), when in the proximity of an information collection device (2), communicating the stored times and dates together with the stored identification data to an information collection device,
• the information collection device (2) transmitting the times and dates and the identification data received from the tag devices to a central processing device (3), and
• the central processing device (3) deriving location information from the times and dates and the identification data.

## Description

The present invention relates to producing location information using electronic tags. More in particular, the present invention relates to a method of producing location information relating to articles provided with tag devices. In addition, the present invention relates to a system and devices for carrying out this method.

It is well known to use electronic tags to trace a wide range of articles, such as clothes, foodstuff, consumer electronics, post items, containers and even cars. Passive electronic tags, also known as transponders, are used for example in shops and warehouses to keep inventory and to prevent theft. When an article carrying a (passive or active) tag passes a detection station (such as an RFID reader), the tag's identification is read and hence the location of the corresponding article is known, as these detection stations have known, typically fixed, locations. Tags may also be used to track articles being shipped by boat, airplane, truck or rail. By reading a tag's identification at certain fixed points, the progress of an article along its route may be monitored. In case the article is lost, its last known location may be determined, thus assisting in the recovery of the article.

United States Patent US 7 484 662 discloses a system for transmitting location event information to and from an electronic tag, such as an RFID (radio frequency identification) tag, from and to one or more location identification stations. When a tag is in the vicinity of such a station, it can communicate with the station and receive the station's identification. The tag may then store this identification in its memory, together with the time and/or date that the identification was received. In this manner, the tag can itself keep a record of the stations where it has been. The stations may be fixed, in which case they have a known location, making it possible to determine the location of the tag at the particular time and date by using the station identification. However, the stations may also be mobile and be accommodated in a plane or railway car, in which case their locations are not known. In the case of mobile stations, US 7 484 662 suggests that the current "location" at which that station is disposed may be ascertained from a look-up table or the like, but leaves the reader in doubt as to the manner in which a look-up table may be used to determine the current position of a railway car. In other words, US 7 484 662 fails to disclose a clear method for determining the position of a tag using the location identification information produced by mobile stations. In addition, the number of times a tag will encounter a station during a route will be limited, thus necessarily providing a limited amount of location information.

It is an object of the present invention to overcome these and other problems of the Prior Art and to provide a method of and a system for producing location information which do not depend on fixed identification stations having known locations.

It is a further object of the present invention to provide a method of and a system for producing location information which produce an increased amount of location information, thus allowing a better tracking of articles.

Accordingly, the present invention provides a method of producing location information relating to articles provided with tag devices, each tag device comprising a memory unit for storing unique identification data associated with the respective tag device, a short range communication unit for communicating with other tag devices, and a clock unit, the method comprising the steps of:
- the tag devices, when in each other's proximity, exchanging identification data and storing the time and date of the exchange together with the identification data as exchange data,
- the tag devices, when in the proximity of an information collection device comprising a memory and a long range communication unit, communicating the stored exchange data to the information collection device,
- the information collection device communicating the exchange data received from the tag devices to a processing device comprising a memory unit and a processing unit, and
- the processing device deriving location information from the exchange data.
   By storing exchange data when tag devices are in each other's proximity, and not only when tag devices are in the proximity of identification stations, the number of encounters and hence the amount of location data will be significantly increased, thus increasing the degree to which the location of the tag device can be known. By transferring the stored exchange data to a processing device via an information collection device, the transmission power of the tag units may be limited while still being able to transfer the exchange data to the processing device. By deriving location information from the exchange data, the desired location information is produced, even when the exchange data are based on tag devices encountering other tag devices, instead of tag devices encountering fixed stations.

It will be understood that the terms short range communication unit and long range communication unit are meant to be relative. The short range communication units are suitable for exchanging information between tag devices, and between transponders and information collection devices, when these devices are within a relatively small distance from each other, for example less than two meters, or less than 30 cm. The long range communication units are suitable for exchanging information between information collection devices and a (central) processing unit over distances of several meters, several km, or even several dozens of km. As will be clear from these non-limiting examples, the "short" range and the "long" range may overlap.

The exchange data may comprise time data indicative of the point in time of the exchange, date data indicative of the date of the exchange, and identification data indicative of the identification of the tag devices involved in the exchange. When stored in a tag device, the exchange data need only include the identification data of other tag devices, as each tag device will store (possibly in another memory section) its own identification. When stored in an information collection device, the exchange data will comprise pairs of identification data, indicative of each pair of tag devices involved in the respective exchange.

Exchange data may not only be produced when a tag device encounters another tag device, but also during conventional encounters of a tag device and an information collection device.

The information collection devices, which serve as intermediaries between the tag devices and the processing device, may be stationary and have a fixed (and preferably known) location. Embodiments using fixed information collection devices have the advantage of being able to provide additional information: the fixed locations of the information collection devices, which may be used to produce additional exchange data involving tag devices and information collection devices. However, the information collection devices need not be fixed and may therefore also be mobile. Although mobile information collection devices are typically not capable of providing information regarding their exact location, they may have more frequent encounters with tag devices and may therefore collect information more often.

In a preferred embodiment, an information collection device is constituted by a dedicated tag device. That is, a particular tag device is adapted to also serve as an information collection device. In this embodiment, such a tag device has a dual function: it both collects information and transmits received information.

In certain embodiments a information collection device transmits the exchange data in batches. That is, the information collection device collects the exchange information from several tag devices and only transmits this information when a certain condition is satisfied, for example when information from a predetermined number (for example 5, 10 or 20) of tag devices has been collected, when its memory is full, or when a certain time period has elapsed. Accordingly, the information collection device may delete the stored exchange data once they have been transferred to the processing device, thus clearing its memory. Similarly, tag devices may delete exchange data once they have been transferred to an information collection device.

In a preferred embodiment of the method according to the present invention, the step of deriving location information comprises the following sub-steps:
- using identification data to select exchange data relating to a particular tag device,
- using a known start position of the particular tag device and the times and dates of exchanges involving the same tag device to produce a set of possible locations at those times and dates,
- using the same exchange data to identify the other tag devices involved in the exchanges represented by the exchange data, and
- using known start positions of the other tag devices to reduce the set of possible locations and to produce a most probable location at the times and dates.
By selecting exchange data while using identification data , a set of data pertaining to the encounters of the tag device associated with the identification data can be produced. The exchange data will comprise dates, times and identification data of other tag devices. By using a known start position of the tag device and a start time, possible locations at the times and dates contained in the exchange data can be determined. Combining those possible locations with the possible locations of the other tag devices derived from the selected exchange data allows the most probable locations for the respective times and dates to be determined.

In an advantageous embodiment, the most probable location is determined for the earliest first time and date and is then used to determine the most probable location for the next time and date. By using a consecutive approach, starting from a known location, accurate location estimates can be produced.

The sub-steps mentioned above preferably involve Bayesian probabilities and Bayesian methods.

The present invention also provides a computer program product for carrying out the method as defined above, in particular, but not exclusively, the step of deriving location information from the exchange data. A computer program product may comprise a set of computer executable instructions stored on a data carrier, such as a CD or a DVD. The set of computer executable instructions, which allow a programmable computer to carry out the method as defined above, may also be available for downloading from a remote server, for example via the Internet.

The present invention additionally provides a system for producing location information relating to articles, the system comprising:
- tag devices comprising a memory unit for storing unique identification data associated with the respective tag device, a short range communication unit for communicating with other tag devices, and a clock unit,
- at least one information collection device comprising a memory and a long range communication unit, and
- a processing device comprising a memory unit and a processing unit for processing exchange data received from the tag devices and deriving location data,
wherein the tag devices are arranged for, when in each other's proximity, exchanging identification data and storing the time and date of the exchange together with the identification data as exchange data, and are further arranged for, when in the proximity of an information collection device, communicating the stored exchange data to the information collection device, and
wherein the information collection device is arranged for communicating the exchange data received from the tag devices to the processing device.

The present invention further provides a tag device for use in the method and/or the system as defined above, the tag device comprising:
- a memory unit for storing identification data associated with the tag device,
- a short range communication unit for communicating with other tag devices, and
- a clock unit,
   the tag device being arranged for, when in the proximity of another tag device, exchanging identification data with the other tag device and storing the time and date of the exchange together with the identification data as exchange data, and
   the tag device further being arranged for, when in the proximity of an information collection device, communicating the stored exchange data to the information collection device.

The present invention still further provides an information collection device for use in the method and/or the system defined above, the information collection device comprising a memory and a long range communication unit and being arranged for receiving and storing exchange data and communicating the stored exchange data to a processing device. As noted above, an information collection device according to the present invention may also have all features of a tag device.

The present invention yet further provides a processing device for use in the method and/or the system defined above, the processing device comprising a memory unit and a processing unit, and being arranged for processing exchange data received from tag devices and for deriving location data from the exchange data.

The present invention will further be explained below with reference to exemplary embodiments illustrated in the accompanying drawings, in which:
Fig. 1 schematically shows a location information system according to the present invention.
Fig. 2 schematically shows the route of an electronic tag device according to the present invention.
Fig. 3 schematically shows an exemplary embodiment of a set of exchange data according to the present invention.
Fig. 4 schematically shows examples of location probability distributions according to the present invention.
Fig. 5 schematically shows an exemplary embodiment of a tag device according to the present invention.
Fig. 6 schematically shows an exemplary embodiment of an information collection device according to the present invention.
Fig. 7 schematically shows an exemplary embodiment of a processing device according to the present invention.

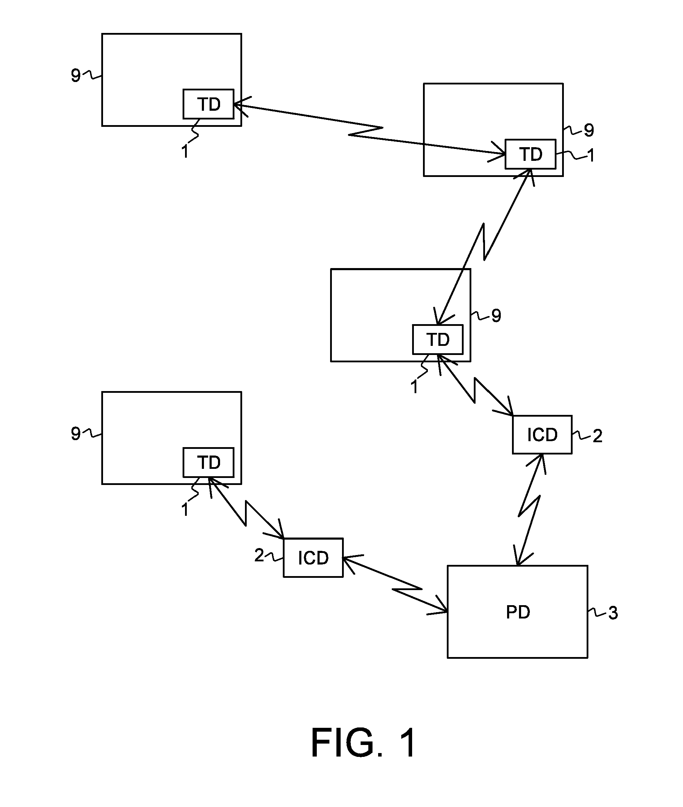

The location information system shown merely by way of non-limiting example in Fig. 1 comprises tag devices (TD) 1, information collection devices (ICD) 2 and a processing device (PD) 3. As will be explained in more detail below, the tag devices 1, which may be attached to articles 9, such as parcels, clothing items or car parts, exchange data when they are in (close) proximity of each other. The distance at which the tag devices exchange data will depend on the particular embodiment and may range from a few millimetres to several centimetres or even a few meters. During each encounter of articles 9 provided with tag devices 1 the tag devices exchange identification data and also register the time and date of the encounter (that is, of the exchange). The data involved in this exchange therefore typically comprise identification data, time data and date data, and may collectively be referred to as exchange data.

The tag devices 1 store and thus collect the exchange data of the encounters with other tag devices. When a tag device 1 encounters an information collection device 2, the former sends all the stored exchange data to the latter. The tag device may then (optionally) erase the sent exchange data from its memory. The information collection device 2 collects the exchange data from a plurality of tag devices 1 and sends the exchange data to the processing device 3. Although it is preferred to collect and send the exchange data from several tag devices in a single transmission (batch), it is also possible to forward the exchange data of each tag device separately, before receiving exchange data from another tag device.

Several information collection devices 2 forward the exchange data to the processing device 3, which is arranged for processing the exchange data so as to produce location data, as will be described in more detail later.

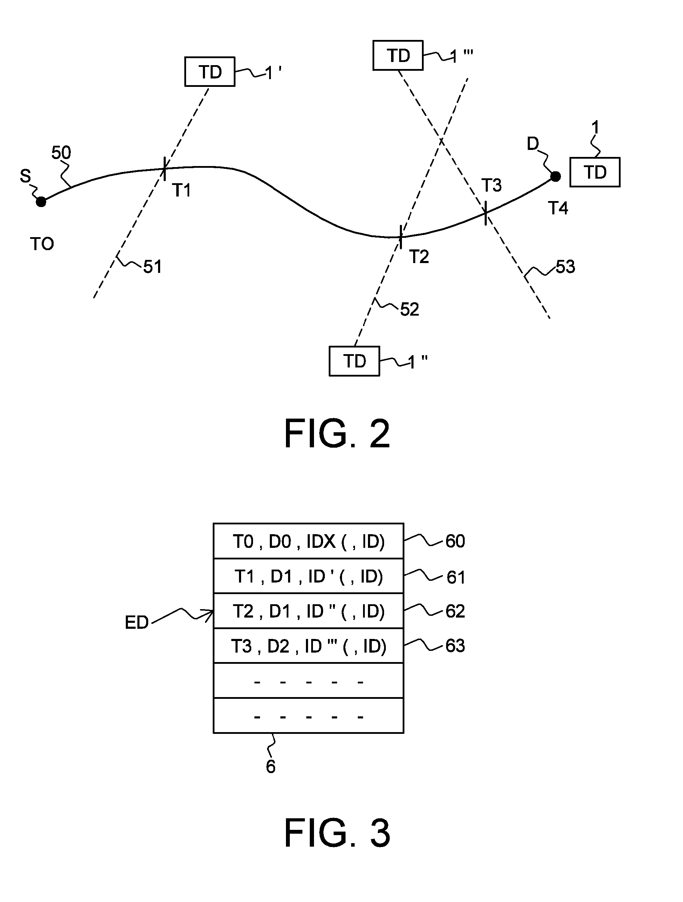

A route 50 of a tag device 1 is schematically illustrated in Fig. 2. At point in time T0 (and date D0), an article and its associated tag device 1 having an identification ID are at start position S. In the present example, this start position S is a known location bearing an identification (IDX in Fig. 3). It is noted that the time and date may collectively be referred to as time (e.g. TO). In the present example, however, the time data and date data are indicated separately as, for example, T0 and D0.

At time T1 (and date D1), the article and tag device 1 encounter another article carrying a tag device 1' having an identification ID'. This other article follows a route 51 which intersects the route 50 of the tag device 1. At point in time T1, the tag devices 1 and l'exchange identification data ID and ID'. The tag device 1 then stores the exchange data consisting of the identification data ID' of the other tag device 1', the time T1 and the date D1. This is shown in Fig. 3, which illustrates a table of exchange data (ED): T1, D1, ID' and (optionally) ID constitute exchange data 61 pertaining to the first encounter. It is noted that the other tag device 1' will also store exchange data including T1 and D1 as well as the identification ID of tag device 1, and optionally its own identification ID'.

It is further noted that each tag device permanently stores its own identification. For this reason, it is not necessary to include the respective own identification in the table of exchange data stored in the tag devices, but the identification should be included in the exchange data collected in the information collection devices. That is, a tag device should send its identification data to an information collection device if these data are not (yet) included in the exchange data.

At time T2, the route 50 of the tag device 1 crosses the route 52 of the further tag device 1". As a result, the tag device 1 stores the identification ID" (represented by corresponding identification data), the time T2 and the date D1 (assuming this happens on the same date as the first encounter) as exchange data (62 in Fig. 3). Similarly, at time T3 and date D2 the route 50 crosses the route 53 of tag device 1'" and stores the corresponding exchange data (63 in Fig. 3). In the present example, the tag device 1 reaches its destination D at T4.

The exchange data are stored in the memory of the tag device 1, as illustrated in Fig. 3. The merely exemplary table 6 comprises a number of entries 60, 61, 62, ... corresponding with the encounters and exchanges at the points in time T0, T1, T2, ... respectively. Each entry consists of a set of exchange data (ED) of one encounter. The set 61, for example, comprises the data T1, D1 and ID' (and optionally ID) of the first encounter. The set 60 is shown to comprise exchange data corresponding to the start position (S in Fig. 2): the start time T0, the start date D0, and the identification IDX of an identification station used to determine the start location.

The exchange data ED stored in the table 6 are used to determine the location of the tag device at various points in time. On the route 50 of Fig. 2, the location of the tag device is only known with certainty at T0. However, the present invention allows the location of the tag device to be determined with a reasonable degree of accuracy at all other points of the route.

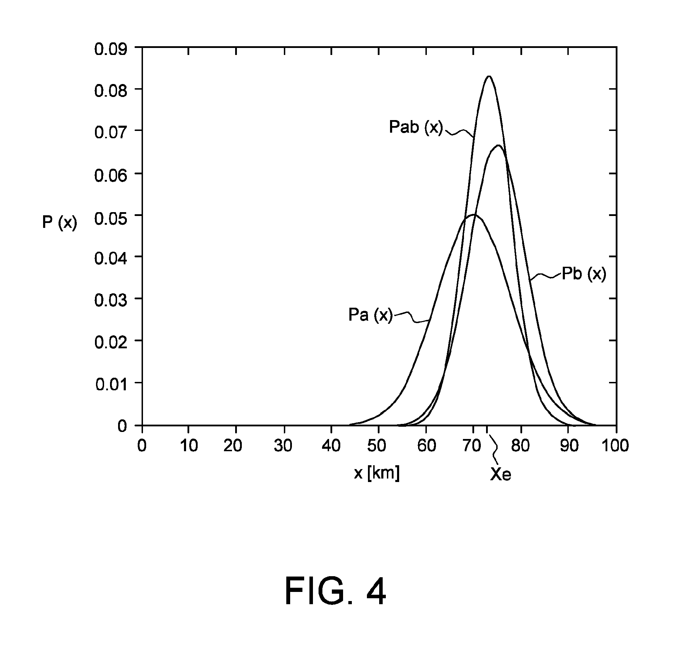

Using the time difference between T0 and T1, an estimate can be made of the possible locations of the tag device along the route. According to the present invention, these estimates are preferably expressed as probabilities, as illustrated in Fig. 4.

Using the route 50 of tag device 1, it can be estimated from the set of exchange data (61 in Fig. 3) corresponding to the first encounter that the probability distribution of the location of tag device 1 at T1 is centred around 70 km. That is, in the present example the most probable distance from the starting point S is 70 km, the probability being distributed as shown by curve Pa(x), where x is the distance in km from the starting point S. In the present example, the probabilities have Gaussian distributions. Using the exchange data (T1', D1', not shown) of tag device 1', a probability distribution of the intersection of routes 50 and 51 can be determined and represented by curve Pb(x). This probability distribution is centred around x=77. Combining the probability distributions Pa(x) and Pb(x) yields a combined probability distribution Pab(x), it can be determined that the most probable point of intersection of routes 50 and 51 is at 73 km from the starting point S, at xₑ=73.

In a similar manner, the most probable locations at T2 and T3 can be determined. By using previous results (for example the most probable location at T1) to determine further locations (for example at T2, T3, ....), the accuracy of the estimates is improved.

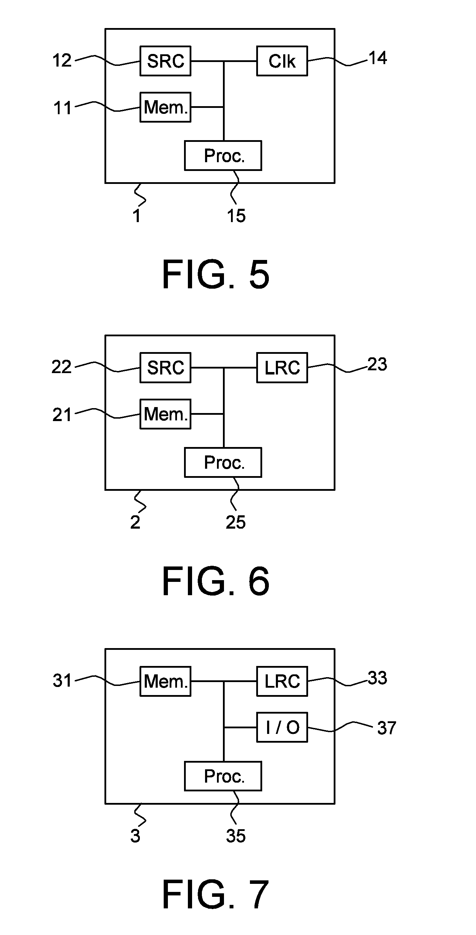

A merely exemplary embodiment of a tag device according to the present invention is schematically illustrated in Fig. 5. The tag device 1 of Fig. 5 comprises a memory (Mem) unit 11, a short range communication (SRC) unit 12, a clock (Clk) unit 14, and a processing (Proc) unit 15. Optionally, the tag device 1 may comprise a proximity detection unit (not shown).

The memory unit 11 is capable of storing exchange data, for example the exchange data ED illustrated in Fig. 3. The memory unit 11 also (permanently or semi-permanently) stores the identification of the tag unit. In addition, the memory unit 11 may store suitable program code (software) for carrying out the exchange. The clock unit 14 provides the time and the date of the exchange. The processing unit 15 is capable of executing the program code and thus controlling out the exchange. The short range communication unit 12 serves to communicate with other tag devices.

In some embodiments, the tag device 1 may comprise a proximity detection unit (not shown) for detecting the proximity of another tag device or of an information collection device. In other embodiments, the proximity detection is carried out by the short range communication unit 12 in conjunction with the processing unit 15.

The tag device 1 is preferably small and rugged so as to be capable of being placed on or in various articles, such as boxes, envelopes, clothing items, plastic crates, mobile telephones, computers, cars, etc..

A merely exemplary embodiment of a information collection device according to the present invention is schematically illustrated in Fig. 6. The information collection device 2 of Fig. 6 comprises a memory (Mem) unit 21, a short range communication (SRC) unit 22, a long range communication (LRC) unit 23, and a processing (Proc) unit 25. The short range communication unit 22 serves to communicate with tag devices, while the long range communication unit 23 serves to communicate with a processing device. It is noted that the terms "short range" and "long range" are not meant to define mutually exclusive communication ranges: the "short range" and the "long range" may in some embodiments overlap. However, the "short range" communication between tag devices will in most embodiment take place within a range of less than 1 metre, while the "long range" communication between an information collection device and a processing device may involve a range of several metres, or even hundreds of metres or kilometres.

The information collection device 2 may be constituted by a dedicated tag device. That is, the information collection device may be a tag device provided with additional components (such as a long range communication unit 23) and program instructions (information collection and transfer software). In this way, the information collection device also produces exchange data.

A merely exemplary embodiment of a processing device according to the present invention is schematically illustrated in Fig. 7. The processing device 3 of Fig. 7 comprises a memory (Mem) unit 31, a long range communication (LRC) unit 33, a processing (Proc) unit 35 and an input/output (I/O) unit 37. The memory unit 31 serves to store suitable program instructions (software), as well as the exchange data received from the information collection devices, and any location data derived from the exchange data. The long range communication unit 33 serves to communicate with and receive exchange data from information collection devices. The input/output unit 37 serves to receive suitable instructions and to output location data.

It is noted that in some embodiments, the information collection devices may be omitted. In such embodiments, the tag devices communicate directly with the processing device, preferably using suitable long range communication units.

In some embodiments, the processing device 3 may be constituted by a suitably programmed general purpose computer provided with communication facilities, such as the long range communication unit.

In the system of the present invention, the memories of the tag devices serve as a pooled memory for storing exchange data: they each store the exchange data relating to a number of encounters involving other tag devices.

The present invention is particularly useful in tracking and tracing applications, for example, but not limited to, tracking and tracing post items, shipments, crates, pallets, parts in factories, files in offices, but also cattle, dogs, children, and other living things.

The present invention is based upon the insight that the precise locations where tags encounter other devices need not be known, since these locations can be approximated using temporal information. The present invention benefits from the further insight that the other devices that tags encounter may also be tags, thus increasing the number of encounters and hence the amount of information collected.

Accordingly, the present invention uses three inventive concepts: (1) tags exchange information to collect data regarding encounters; (2) information collection devices collect information from the tag devices and pass this information on to processing devices, and (3) the encounter data are used to statistically derive location information.

It is noted that any terms used in this document should not be construed so as to limit the scope of the present invention. In particular, the words "comprise(s)" and "comprising" are not meant to exclude any elements not specifically stated. Single (circuit) elements may be substituted with multiple (circuit) elements or with their equivalents.

It will be understood by those skilled in the art that the present invention is not limited to the embodiments illustrated above and that many modifications and additions may be made without departing from the scope of the invention as defined in the appending claims.

## Claims

1. A method of producing location information relating to articles (9) provided with tag devices (1), each tag device comprising a memory unit (11) for storing unique identification data (ID) associated with the respective tag device, a short range communication unit (12) for communicating with other tag devices, and a clock unit (13), the method comprising the steps of:
• the tag devices (1), when in each other's proximity, exchanging identification data (ID) and storing the time and date (e.g. T1, D1) of the exchange together with the identification data as exchange data (ED),
• the tag devices (1), when in the proximity of an information collection device (2) comprising a memory (21) and a long range communication unit (23), communicating the stored exchange data (ED) to the information collection device,
• the information collection device (2) communicating the exchange data received from the tag devices to a processing device (3) comprising a memory unit (31) and a processing unit (35), and
• the processing device (3) deriving location information from the exchange data (ED).

2. The method according to claim 1, wherein the information collection device (2) is constituted by a fixed station.

3. The method according to claim 1, wherein the information collection device (2) is constituted by a dedicated tag device.

4. The method according to any of the preceding claims, wherein the information collection device (2) transmits the exchange data (ED) in batches.

5. The method according to any of the preceding claims, wherein a tag device (1) deletes stored exchange data once they have been communicated to an information collection device (2).

6. The method according to any of the preceding claims, wherein an information collection device (2) deletes stored exchange data once they have been communicated to a processing device (3).

7. The method according to any of the preceding claims, wherein the step of deriving location information comprises the following sub-steps:
• using identification data (ID) to select exchange data (ED) relating to a particular tag device (1),
• using a known start position of the particular tag device (1) and the times and dates of exchanges involving the same tag device to produce a set of possible locations at those times and dates,
• using the same exchange data (ED) to identify the other tag devices involved in the exchanges represented by the exchange data, and
• using known start positions of the other tag devices to reduce the set of possible locations and to produce a most probable location at the times and dates.

8. The method according to claim 7, wherein the most probable location is determined for earliest first time and date and is then used to determine the most probable location for the next time and date.

9. The method according to claim 7 or 8, involving Bayesian probabilities.

10. A computer program product for carrying out the method according to any of claims 1-9.

11. A system for producing location information relating to articles (9), the system comprising:
• tag devices (1) comprising a memory unit (11) for storing unique identification data (ID) associated with the respective tag device, a short range communication unit (12) for communicating with other tag devices, and a clock unit (13),
• at least one information collection device (2) comprising a memory (21) and a long range communication unit (23), and
• a processing device (3) comprising a memory unit (31) and a processing unit (35) for processing exchange data received from the tag devices (1) and deriving location data,
wherein the tag devices (1) are arranged for, when in each other's proximity, exchanging identification data (ID) and storing the time and date (e.g. T1, D1) of the exchange together with the identification data as exchange data (ED), and are further arranged for, when in the proximity of an information collection device (2), communicating the stored exchange data (ED) to the information collection device, and
wherein the information collection device (2) is arranged for communicating the exchange data received from the tag devices to the processing device (3).

12. The system according to claim 11, wherein the processing device (3) is arranged for:
• using identification data (ID) to select exchange data (ED) relating to a particular tag device (1),
• using a known start position of the particular tag device (1) and the times and dates of exchanges involving the same tag device to produce a set of possible locations at those times and dates,
• using the same exchange data (ED) to identify the other tag devices involved in the exchanges represented by the exchange data, and
• using known start positions of the other tag devices to reduce the set of possible locations and to produce a most probable location at the times and dates.

13. A tag device (1) for use in the method according to any of claims 1-9 and/or the system according to claim 11 or 12, the tag device comprising:
• a memory unit (11) for storing identification data associated with the tag device,
• a short range communication unit (12) for communicating with other tag devices, and
• a clock unit (13),
the tag device being arranged for, when in the proximity of another tag device, exchanging identification data (ID) with the other tag device and storing the time and date (e.g. T1, D1) of the exchange together with the identification data as exchange data (ED), and
the tag device further being arranged for, when in the proximity of an information collection device (2), communicating the stored exchange data (ED) to the information collection device.

14. An information collection device (2) for use in the method according to any of claims 1-9 and/or the system according to claim 11 or 12, the information collection device (2) comprising a memory (21), a short range communication unit (22) and a long range communication unit (23), and being arranged for receiving and storing exchange data (ED) from tag device (1) and communicating the stored exchange data (ED) to a processing device (3).

15. A processing device (3) for use in the method according to any of claims 1-9 and/or the system according to claim 11 or 12, the processing device comprising a memory unit (31), a long range communication unit (33) and a processing unit (35) and being arranged for processing exchange data (ED) received from tag devices (1) and for deriving location data from the exchange data.
